# EUROPÄISCHE PATENTSCHRIFT

(11) **EP 2 739 371 B1**
(45) Veröffentlichungstag und Bekanntmachung des Hinweises auf die Patenterteilung: **26.04.2017**
(21) Anmeldenummer: 12772198.3
(22) Anmeldetag: 06.08.2012
(51) Int. Cl.: B01D 33/21, B01D 33/23, B01D 25/26

(54) **VORRICHTUNG ZUM FILTERN VON FLÜSSIGKEITEN, INSBESONDERE VON ABWÄSSERN, UND VERFAHREN ZUM FILTERN VON FLÜSSIGKEITEN**
APPLIANCE FOR FILTERING LIQUIDS, IN PARTICULAR WASTE WATER, AND METHOD FOR FILTERING LIQUIDS
APPAREIL DE FILTRATION DE LIQUIDES, EN PARTICULIER D'EAUX USÉES, ET PROCÉDÉ POUR FILTRER DES LIQUIDES

(30) Priorität: 04.08.2011 DE 202011104039 U
(43) Veröffentlichungstag der Anmeldung: 11.06.2014
(73) Patentinhaber: Reinhold Wesselmann GmbH, 49688 Lastrup / Nieholte (DE)
(72) Erfinder: WESSELMANN, Reinhold, 49661 Cloppenburg (DE)
(74) Vertreter: Jabbusch, Matthias
(86) Internationale Anmeldenummer: PCT/DE2012/000789
(87) Internationale Veröffentlichungsnummer: WO 2013/017123

(56) Entgegenhaltungen:
- EP-A1- 1 854 530
- WO-A2-2005/011833
- DE-A1- 2 249 468
- JP-A- 2009 226 377
- US-A1- 2002 014 449
- US-A1- 2005 023 207
- US-A1- 2007 144 956

## Beschreibung

Die Erfindung betrifft eine Vorrichtung zum Filtern von Flüssigkeiten, insbesondere von Abwässern, mit aufeinanderliegenden Filterscheiben, welche einen Fließweg für eine zu filternde Flüssigkeit ausbilden, wobei sie zumindest eine Einrichtung zum Erzeugen einer Bewegung der Filterscheiben aufweist. Die Erfindung betrifft des weiteren ein Verfahren zum Filtern von Flüssigkeiten, insbesondere von Abwässern, unter Verwenden einer vorgenannten Vorrichtung.

Flüssigkeiten liegen häufig in einem verschmutzten Zustand bzw. in einem mit Dickstoffen oder Fremdstoffen beladenen Zustand vor. Derartige Flüssigkeiten können Schmutzwässer, ölbelastete Gewässer, eisenbelastete Gewässer sein. Mit einer Vorrichtung der eingangs genannten Gattung wird ein Herauslösen der Stoffe aus der Flüssigkeit vorgenommen, z. B. um somit die gereinigte Flüssigkeit wiederverwenden zu können. Andere Anwendungsfälle sind die Trinkwasser-aufbereitung z. B. aus Flüssen und Meeren, in der Lebensmittelindustrie (Molkereien, Weinbetriebe) sowie bei der Rückgewinnung aus Flüssigkeiten.

Im Stand der Technik wurde bereits eine eingangs genannte Vorrichtung zur Ultra-Filtration vorgeschlagen. Diese Vorrichtung weist Filterscheiben auf, mit denen für die Flüssigkeit ein Fließweg ausgebildet ist. Die Flüssigkeit wird an Filterporen vorbeigeführt. Ein Teil der Flüssigkeit geht den Weg durch die Filterporen hindurch, beispielsweise, weil auf der gegenüberliegenden Seite ein Bereich mit niedrigeren Druckverhältnissen vorhanden ist. Die zu filternde Flüssigkeit wird also an den Filterporen entlang geführt, ein Teil der Flüssigkeit wird dann aus der zu filternden Flüssigkeit herausgezogen.

Bei der bekannten Vorrichtung besteht jedoch die Gefahr, dass in der Flüssigkeit vorhandene Stoffe die Filterporen zusetzen. Die Filtrationsleistung wird reduziert. Daher wurde bereits vorgeschlagen, die Filterscheiben zu bewegen. Dabei kann jedoch nur eingeschränkt bewegt werden, da Filterscheiben verrutschen können. Daher sind Vorrichtungen bekannt, die Verbindungen zwischen den Filterscheiben aufweisen (siehe US2002014449 und EP1854530).

Der Erfindung liegt die Aufgabe zu Grunde, eine Vorrichtung der eingangs genannten Gattung aufzuzeigen, welche eine zuverlässige Filtration einer Flüssigkeit ohne Gefahr eines Zusetzens der Filterporen und ohne ein Verrutschen der Filterscheiben ermöglicht.

Diese Aufgabe ist erfindungsgemäß durch den Gegenstand des Anspruchs 1 gelöst.

Bei der erfindungsgemäßen Vorrichtung ist kein statischer Betrieb vorgesehen. Der Vorrichtung ist eine Bewegungseinrichtung zugeordnet, welche die Filterscheiben in Bewegungen versetzen kann. Diese Bewegungen bewirken, dass sich keine Stoffe an den Filterporen ab- und festsetzen können. Die Filterscheiben erfahren eine Bewegung, welche sie unter der mit zum Beispiel Fremdstoffen beladenden Flüssigkeit ständig wegziehen. Da die Flüssigkeit während dieses ständigen Wegziehens weiter durch die Vorrichtung geführt wird, sind zuvor an einer bestimmten Stelle der Filterscheibe befindliche Schwebstoffe zu späteren Zeitpunkten in anderen Bereichen angekommen. Ein Verweilen an bestimmten Stellen tritt nicht auf.

Damit die Filterscheiben der erfindungsgemäßen Vorrichtung trotz Einbringen der Bewegungsenergie ihre Lage nicht verändern, ist nach der Erfindung vorgesehen, dass die Filterscheiben Mittel zum formschlüssigen Verbinden einander benachbarter Filterscheiben aufweisen. Die einzelnen Filterscheiben liegen aufeinander. Sie haben daher jeweils eine direkte Anlage zu benachbarten Filterscheiben bzw. zu einem Boden oder einem Deckel. Durch die Mittel zum formschlüssigen Verbinden greifen die Filterscheiben ineinander und bilden dadurch eine gegenseitige Verdrehsicherung aus. Auch der Boden bzw. der Deckel können derartige formschlüssige Verbindungsmittel aufweisen, welche die jeweils außen liegende Filterscheibe beaufschlagen. Die Mittel zum formschlüssigen Verbinden der benachbarten Filterscheiben sind dabei so ausgebildet, dass sie Kräfte übertragen können. Das ist allein schon dadurch gewährleistet, dass die Mittel wenigstens einem Umfangsabschnitt der Filterscheibe zugeordnet sind. Es erfolgt also kein Anordnen von Mitteln an einigen Punkten beispielsweise nur zur Orientierung der Ausrichtung der aufeinanderliegenden Filterscheiben. Vielmehr werden über einen längeren Bereich, nämlich über einen Umfangsbereich, Mittel zum formschlüssigen Verbinden bereitgestellt.

Die Einrichtung zum Erzeugen der Bewegung ist ein Oszillationsantrieb. Mit einem derartigen Antrieb ist eine alternierende Bewegung ermöglicht, welche auf einem kurzen Wegabschnitt durchgeführt wird. Die Bewegung kann beispielsweise eine Hin- und Herbewegung sein, für die kein großer Weg und damit Bauraum benötigt wird. Vorzugsweise erfolgt eine begrenzte Rotation der Filterscheiben, so dass mit dem Oszillationsantrieb ein Hin- und Herdrehen durchgeführt wird. Die Filterscheiben werden in eine Schwingung versetzt, die Bewegungen erfolgen beschleunigt. Vorzugsweise werden die Filterscheiben in eine Resonanzschwingung gesetzt, dann ist für das Aufrechterhalten dieser Schwingung nur eine geringe Menge Energie durch den Oszillationsantrieb einzubringen. Vorzugsweise sind die Filterscheiben in einem Gehäuse angeordnet, durch dieses wird die zu filternde Flüssigkeit geführt. Das Gehäuse kann über Federelemente in einem Hilfsrahmen angeordnet sein, in den Hilfsrahmen wird dann mit Hilfe des Antriebes eine Schwingung eingebracht. Aufgrund der federnden Aufhängung des Gehäuses verstärkt sich diese Schwingung zu Rotationsbewegungen von beispielsweise 12 mm. Die Fließgeschwindigkeit der Flüssigkeit beträgt dabei beispielsweise 1 m bis 2 m/s.

Nach der Erfindung ist vorgesehen, dass die Mittel zum formschlüssigen Verbinden zwei einander gegenüberliegenden Umfangsabschnitten der Filterscheibe zugeordnet sind. Die Aufteilung der Mittel zum formschlüssigen Verbinden auf zwei Umfangsabschnitte verteilt die auftretenden Kräfte auf zwei Abschnitte der Filterscheibe. Die Mittel sind an einander gegenüberliegenden Umfangsabschnitten angeordnet, so dass zwischen beiden Angriffsbereichen der Kräfte gleichgroße Abschnitte des Filterscheibenumfanges liegen. Die Umfangsabschnitte mit den Mitteln zum formschlüssigen Verbinden nehmen dabei vorzugsweise größere Abschnitte der Umfangsabschnitte ein, wenigsten Umfangsabschnitte größer 180° sind mit Mitteln zum formschlüssigen Verbinden ausgerüstet.

Durch das Anordnen der Mittel zum formschlüssigen Verbinden an den Umfangsabschnitten der Filterscheiben ergeben sich zudem günstige Hebelverhältnisse. Nach der Erfindung ist weiterhin vorgesehen, dass die Mittel zum formschlüssigen Verbinden durch auf der Oberfläche jeder Filterscheibe angeordnete Vorsprünge und Vertiefungen ausgebildet sind. Vorsprünge einer Filterscheibe können in die Vertiefungen einer benachbarten Filterscheibe eingreifen. Dadurch wird ein sicherer formschlüssiger Verbund ausgebildet. Durch die Vorsprünge und Vertiefungen kann eine in den Außenrand jeder Filterscheibe eingebrachte Wellenkontur ausgebildet werden. Konstruktiv können die Vorsprünge als Zähne ausgebildet sein, welche in entsprechend kongruent geformte Zahnlücken vorstehen können.

Zur Ausbildung jeder Filterscheibe selbst sieht eine Weiterbildung der Erfindung vor, dass diese aus zwei aufeinanderliegenden Membranplatten ausgebildet ist. Durch diese Ausbildung ist eine Stabilität der Filterscheibe gegeben. Jede Filterscheibe ist doppelwandig ausgebildet, beide Wände sind aus Platten gebildet. Die Platten sind dünn ausgefertigt, weshalb sie als Membranplatten bezeichnet werden.

Die Filterscheiben werden dann aufeinander gelegt, dazwischen können Einlegefilterelemente angeordnet werden. Die Filterscheiben selbst weisen Durchbrüche zur Durchleitung der zur filternden Flüssigkeit auf, die fließt dann zwischen zwei aufeinanderliegenden Filterscheiben hindurch, dabei an dem Einlegefilterelemente vorbei. Wasser kann durch die Wände und Poren des Einlegefilterelementes hindurchtreten und aus der zur filternden Flüssigkeit herausgelöst werden. Auf den Membranplatten sind Vorsprünge ausgebildet, welche verhindern, dass das Einlegefilterelemente direkt flächig an den Membranplatten anliegt, zum anderen dienen diese Vorsprünge auch als Wasserleitelemente.

Nach einer nächsten Weiterbildung der Erfindung ist vorgesehen, dass die Filterscheiben auf zumindest einen Zentraldorn aufgeschoben sind, dessen freie Enden Mittel zum Aufeinanderpressen der Filterscheiben aufweisen. Die Filterscheiben liegen unmittelbar aufeinander. Dabei sind sie durch einen Zentraldorn geführt. Dieser hat am Ende Mittel zum Aufeinanderpressen der Filterscheiben. Auf die Filterscheiben wird somit eine Kraft ausgeübt, die neben dem formschlüssigen Verbinden durch die z. B. Wellenkontur auch eine kraftschlüssige Verbindung der Filterscheiben bewirkt. Durch die eingeformten bzw. aufgesetzten Vorsprünge entsteht eine Welligkeit der Filterscheiben, wodurch bei vorhandener Elastizität des Filterscheibenmaterials ein Federeffekt hervorgerufen wird. Werden diese Filterscheiben verpresst, erfolgt ein Einfedern der Filterscheiben. Lässt die Presskraft etwas nach, wird die Federwirkung etwas geringer, die Filterscheiben liegen aber gleichwohl immer noch sicher, insbesondere verdrehsicher, aufeinander.

Der Zentraldorn kann einen nicht rotationssymmetrischen, beispielsweise einen eckigen, Querschnitt haben. Auch dadurch wird eine gewisse Verdrehsicherheit der Filterscheiben hergestellt, nämlich dann, wenn diese jeweils einen eckigen Durchbruch aufweisen, durch den der Zentraldorn geführt wird und die Maße von Zentraldorn und Durchbruch etwa gleich sind. Der Zentraldorn dient somit einer Verdrehsicherung der Filterscheiben, dabei aber auch der Orientierung der Filterscheiben zueinander sowie ihrer drehrichtigen Positionierung aufeinander.

Zur lagesicheren Zuordnung der Filterscheiben zueinander sind somit die formschlüssig ineinandergreifenden Mittel an den Filterscheiben, die nicht rotationssymmetrische Ausbildung des Zentraldorns und das Einbringen einer Presskraft auf die Filterscheibe vorgesehen. Es erfolgt somit eine Mehrfachsicherung der Filterscheiben gegen ein ungewolltes Verrutschen zueinander.

Zur Erhöhung des Kraftschlusses zwischen den Filterscheiben können neben dem Zentraldorn noch weitere Mittel zum Aufeinanderpressen der Filterscheiben vorgesehen sein, beispielsweise an der Außenseite des Gehäuses angebrachte Zuganker.

Nach einer nächsten Weiterbildung der Erfindung ist vorgesehen, dass an den freien Enden des Zentraldorns Flanschplatten angeordnet sind, welche auf ihrer den Filterscheiben zugeordneten Seite jeweils eine Kontur gleich der Kontur der Filterscheibe aufweisen. Entlang des Zentraldorns wird eine Presskraft auf die Filterscheiben eingebracht. Das Einbringen erfolgt konstruktiv über die an den freien Enden des Zentraldorns angeordneten Flanschplatten, welche einen Boden und einen Deckel für das Gehäuse ausbilden. Damit sich diese formgerecht an die Filterscheiben anlegen können und zwischen jede Flanschplatte und die außen liegende Filterscheibe bereits ein Einlegefilterelement eingelegt werden kann, sind Flanschplatten mit der Kontur der Filterscheiben ausgerüstet. Die Flanschplatten weisen also auch beispielsweise Zähne als Vorsprünge zum formschlüssigen Verbinden auf, es können auch Vorsprünge für die Anlage des Einlegefilterelementes sowie zur Wasserleitung vorgesehen sein. Die Konturen sind beispielsweise an die Flanschplatten angeschweißt oder eingeformt.

Im Zentrum jeder Filterscheibe ist vorzugsweise ein Einlegeblockteil angeordnet, das einen Durchbruch zum Hindurchführen des Zentraldorns aufweist. Durch die Membranplatten wird das Einlegefilterelement zum Abscheiden von Teilen der mit Stoffen beladenden Flüssigkeit gehalten. Durch das im Zentrum der Filterscheibe angeordnete Einlegeblockteil erfolgt hier eine Verstärkung der Filterscheibe. Das Einlegeblockteil stellt zudem den Durchbruch zum Hindurchführen des Zentraldorns zur Verfügung. Weitere Durchbrüche können für ein Abfließen der Flüssigkeit nach ihrer Filterung vorgesehen sein. Neben dem Durchbruch für den Zentraldorn sind die weiteren Durchbrüche für das Abfließen der Flüssigkeit vorzugsweise um den Zentraldorndurchbruch angeordnet. Herausgefilterte Flüssigkeit kann somit von allen Seiten abfließen. Weitere Durchbrüche zum Ableiten des Filtrats können auch dann vorgesehen sein, wenn kein Einlegeblockteil gegeben ist.

Im Bereich des Zentraldorns wird somit eine Abflussmöglichkeit für herausgefilterte Flüssigkeit ausgebildet. Die Druckverhältnisse in diesem Bereich werden so niedrig eingestellt, dass ein Druck innerhalb der Vorrichtung zum Hindurchdrücken von Wasser durch die Einlegefilterelemente ausgebildet ist. Die Flüssigkeit wird in die erfindungsgemäße Vorrichtung mit einem Druck eingeführt, der Ausgang der Flüssigkeit kann vorgespannt werden, um diesen Druck aufrechtzuerhalten. Teile der Flüssigkeit gehen dann den Weg zu einem Bereich mit geringerem Druck durch die Einlegefilterelemente hindurch.

Die Bauteile der Filterscheibe sind vorzugsweise miteinander verschweißt, insbesondere laserverschweißt. Sie können dadurch maßhaltig gefertigt werden und maßhaltig miteinander verbunden werden. Vorzugsweise sind die Filterscheiben aus Edelstahl, insbesondere durch ein Hydroformen gefertigt, dieses Herstellungs-verfahren ermöglicht eine maßhaltige Fertigung. Alternativ können die Filterscheiben auch aus einem Kunststoff oder aus Keramik hergestellt werden.

Um eine gewünschte Wasserleitung zu erhalten, wird jede Filterscheibe mit einer Flachdichtung ausgerüstet, welche vorzugsweise in eine in die Oberfläche der Filterscheibe eingebrachte Nut eingelegt ist. Das Einlegen kann durch einen Kleber unterstützt werden. Die Flachdichtung kann Kräfte sicher aufnehmen, durch die größere Breite der Flachdichtung ist zudem ihre Festlegung auf der Filterscheibe sicherer herstellbar. Die Flachdichtung kann auch am Einlegefilterelement befestigt sein.

Die Herstellung der Filterscheiben sowie der entsprechenden Ausgestaltungen für die Flanschplatten durch Hydroformen ermöglicht ein maßhaltiges Fertigen mit definierten Höhenmaßen. Diese Höhenmaße sind wichtig für das definierte Anpressen der Filterscheiben sowie der von den Filterscheiben getragenen Dichtungen.

Das erfindungsgemäße Verfahren löst die Aufgabe dadurch, dass als Einrichtung zum Erzeugen einer Bewegung der Filterscheiben ein Oszillatorantrieb mit einer Frequenz ≥ 50 Hz eingesetzt wird.

Das Betreiben des Oszillatorantriebes mit einer derart hohen Frequenz bewirkt ein beschleunigtes Bewegen der Filterscheiben mit dem vorteilhaften Ergebnis, dass ein hoher Durchsatz zu filternder Flüssigkeit möglich ist. Die Effektivität des erfindungsgemäßen Verfahrens ist erhöht. Durch den Einsatz der erfindungsgemäßen Vorrichtung mit lagesicherer Anordnung der Filterscheiben zueinander tritt bei einem derart beschleunigten Bewegen der Filterscheiben kein Verrutschen auf.

Die Oszillationsbewegung der Filterscheiben kann ausgehend von einer Mittellage in jede Richtung etwa 10 mm betragen. Der Gesamtweg der Filterscheiben beträgt somit etwa 20 mm, eine deutliche Relativbewegung zwischen Filterscheiben und geförderter Flüssigkeit ist damit möglich.

Die zu filternde Flüssigkeit kann in die eingesetzte Vorrichtung mit einem hohen Druck aufgegeben werden. Möglich sind Drücke bis zu 90 bar, diese bewirken ein hohes Gefälle zwischen den durch das Einlegefilterelement getrennten Bereichen.

Ein Ausführungsbeispiel der Erfindung, aus dem sich weitere erfinderische Merkmale ergeben, ist in der Zeichnung dargestellt. Es zeigen:
Fig. 1: eine perspektivische Ansicht einer Vorrichtung zum Filtern von Flüssigkeiten.
Fig. 2: eine Schnittansicht der Vorrichtung gemäß Fig. 1
Fig. 3: eine maßstäblich vergrößerte Ansicht einer Einzelheit aus Fig. 2.
Fig. 4: eine maßstäblich vergrößerte perspektivische Ansicht einer Filterscheibe der Vorrichtung gemäß Fig. 1 und
Fig. 5: eine perspektivische Ansicht für eine Einlegefilterelement.

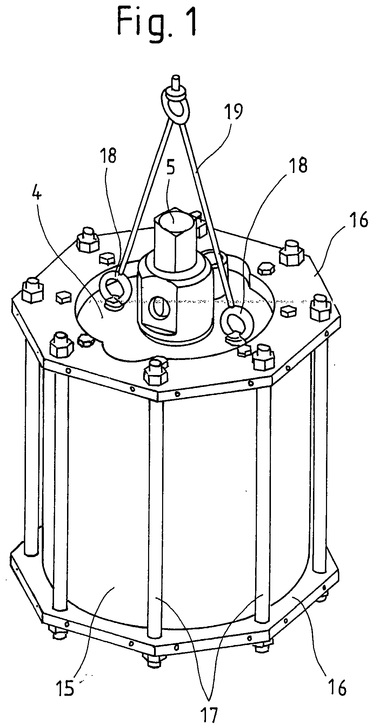

Die Filtervorrichtung in Fig. 1 weist ein rohrförmiges Gehäuse 15 auf. Die freien Ränder dieses rohrförmigen Gehäuses 15 sind eingefasst durch zwei Kragenringe 16, welche über Zuganker 17 jeweils gegen das Gehäuse 15 geführt sind. Unterhalb der Kragenringe 16 liegen Flanschplatten 4. An der oberen Flanschplatte 4 sind Ösen 18 befestigt, an welche ein Aufhängemittel 19 angeschlagen ist.

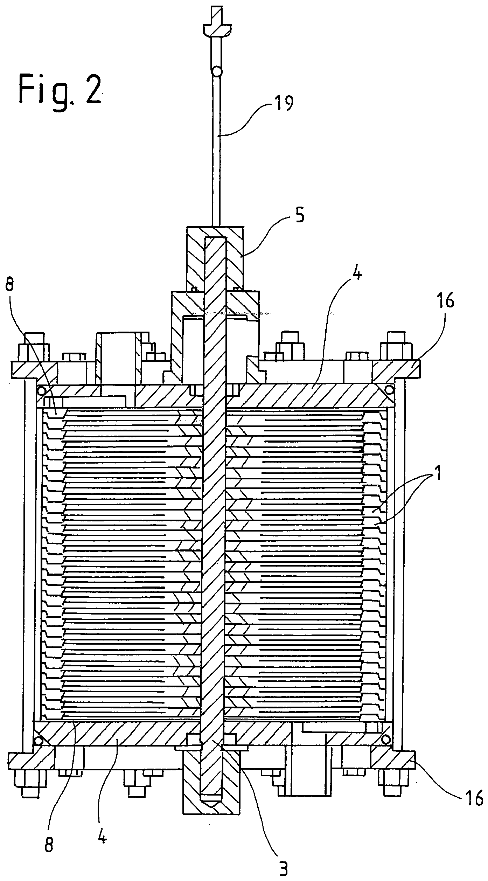

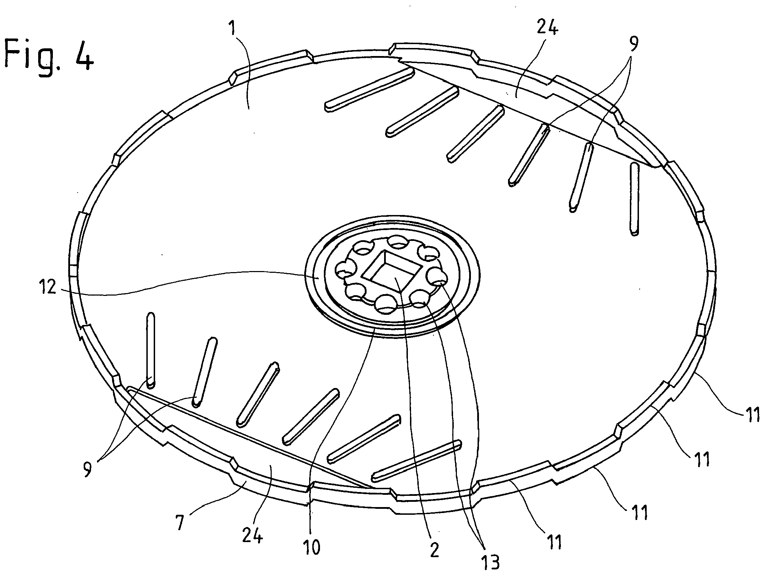

Fig. 2 zeigt, dass zwischen den Flanschplatten 4 Filterscheiben 1 angeordnet sind. Die Filterscheiben 1 sind kreisrund ausgebildet, in ihrem Zentrum haben sie einen Durchbruch 2 (Fig. 4). Mit diesem Durchbruch 2 sind die Filterscheiben 1 auf einen Zentraldorn 3 aufgeschoben.

An den freien Enden des Zentraldorns 3 sind die Flanschplatten 4 als Boden und Deckel angeordnet. Der Raum zwischen beiden Flanschplatten 4 ist im einsatzbereiten Zustand der Vorrichtung vollständig mit Filterscheiben 1 gefüllt. Über eine auf den Zentraldorn 3 aufgebrachte Spannmutter 5 können beide Flanschplatten 4 einander angenähert werden, zwischen den Flanschplatten 4 angeordnete Filterscheiben 1 werden dabei verpresst.

Aus Fig. 2 und 4 wird deutlich, dass die Filterscheiben 1 eine Wellenkontur 7 haben, durch welche Mittel zum formschlüssigen Verbinden einander benachbarter Filterscheiben 1 ausgebildet werden. Auf die Oberfläche der Filterscheibe 1 sind Vorsprünge 9 zur Flüssigkeitsleitung aufgebracht. Weiterhin auf die Filterscheibe 1 aufgebracht ist eine Flachdichtung 10.

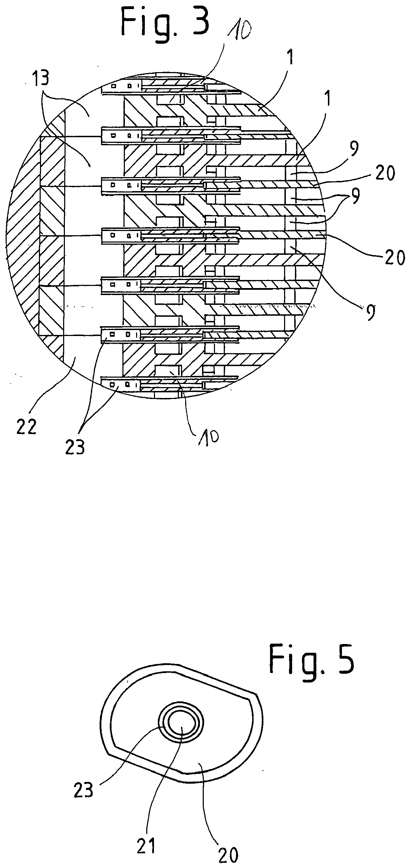

Die Vorsprünge 9 zur Flüssigkeitsleitung sind auch in Figur 3 gezeigt. Aus Figur 3 wird deutlich, dass zwischen zwei Vorsprüngen 9 das Filtereinlegeelement 20 fixiert ist. Es wird zwischen den Vorsprüngen 9 zweier aufeinanderliegender Filterscheiben 1 gehalten. Das Einlegefilterelement 20 ist in Fig. 5 gezeigt. Es hat eine kreisrunde Öffnung 21 zum Hindurchführen des Zentraldorns 3 und zum Anlegen an im Zentrum jeder Filterscheibe 1 vorhandene Einlegeblockteile 12 (Fig. 4). Zu filternde Flüssigkeit fließt im Zwischenraum zwischen zwei einander benachbarten Filterscheiben 1 hindurch und dabei am Einlegefilterelement 20 entlang. Flüssigkeit kann in das Einlegefilterelement 20 eintreten und fließt innerhalb dieses in Richtung Zentraldorn 3, wo durch die im Anlegeblockteil 12 vorhandenen Durchbrüche 13 (Fig. 4) ein Kanal 22 für das Filtrat ausgebildet ist.

In das Einlegefilterelement 20 ist zur Einfassung der Öffnung 21 ein Ring 23 mit Durchbrüchen eingesetzt, dieser Ring 23 mit Durchbrüchen 21 ist aus Fig. 3 ersichtlich. Das Wasser tritt durch diese Durchbrüche hindurch in den Kanal 22 ein.

Die den Filterscheiben 1 zugekehrte Seite die Flanschplatte 4 ist mit einer Kontur 8 belegt, welche an die Kontur der Filterscheiben 1 angepasst ist. Die Kontur 8 kann in die Flanschplatte 4 eingeformt sein, auch ein Aufschweißen einer entsprechenden Kontur 8 ist möglich.

Fig. 4 zeigt die Wellenkontur der Filterscheibe 1. Die Wellenkontur entsteht durch auf die Filterscheibe 1 wechselseitig aufgesetzte Vorsprünge 11. Diese Vorsprünge 11 können in entsprechende Täler einer benachbarten Filterscheibe 1 vorstehen. In einander gegenüberliegenden Umfangsbereichen der Filterscheibe 1 sind Durchlässe 24 für die zu filternde Flüssigkeit vorhanden. Über diese Durchlässe 24 kann die zu filterte Flüssigkeit von der Oberfläche der in Fig. 4 dargestellten Filterscheibe 1 auf die Oberfläche einer darunterliegende Filterscheibe 1 fließen. Auf der in Fig. 4 gezeigten Filterscheibe fließt die Flüssigkeit entlang eines Einlegefilterelementes 20, auf der darunterliegenden Filterscheibe 1 trifft es dann auf das nächste Einlegefilterelement 20. Das Wasser kann nach jeder Filterscheibe 1 seine Fließrichtung alternierend wechseln, möglich ist aber auch ein paralleler Betrieb mehrerer unmittelbar übereinanderliegender Filterscheiben 1.

## Patentansprüche

1. Vorrichtung zum Filtern von Flüssigkeiten, insbesondere von Abwässern, mit aufeinander liegenden Filterscheiben, welche einen Fließweg für eine zu filternde Flüssigkeit ausbilden, wobei sie zumindest eine Einrichtung zum Erzeugen einer Bewegung der Filterscheiben aufweist, wobei die Einrichtung zum Erzeugen der Bewegung ein Oszillationsantrieb zum Erzeugen einer Oszillationsbewegung der Filterscheiben ist, und die Filterscheiben (1) Mittel zum formschlüssigen Verbinden einander benachbarter Filterscheiben (1) aufweisen, wobei diese Mittel wenigstens einem Außenumfangsabschnitt der Filterscheibe (1) zugeordnet sind und diese Mittel durch auf der Oberfläche jeder Filterscheibe (1) angeordnete Vorsprünge und Vertiefungen ausgebildet sind.

2. Vorrichtung nach Anspruch 1, **dadurch gekennzeichnet, dass** die Mittel zum formschlüssigen Verbinden zwei einander gegenüberliegenden Umfangsabschnitten der Filterscheibe (1) zugeordnet sind.

3. Vorrichtung nach Anspruch 1 oder 2, **dadurch gekennzeichnet, dass** jede Filterscheibe (1) etwa kreisförmig ausgebildet ist und dass die Mittel zum formschlüssigen Verbinden Umfangsabschnitten größer als 180° auf dem Umfang der Filterscheibe (1) zugeordnet sind.

4. Vorrichtung nach Anspruch 1 oder 2, **dadurch gekennzeichnet, dass** jede Filterscheibe (1) etwa kreisförmig ausgebildet ist und dass die Mittel zum formschlüssigen Verbinden Umfangsabschnitten größer als 10° auf dem Umfang der Filterscheibe (1) zugeordnet sind.

5. Vorrichtung nach Anspruch 4, **dadurch gekennzeichnet, dass** die Vorsprünge und Vertiefungen durch eine in den Außenrand jeder Filterscheibe (1) eingebrachte Wellenkontur (7) ausgebildet sind.

6. Vorrichtung nach Anspruch 5, **dadurch gekennzeichnet, dass** die Wellenkontur (7) durch auf die Oberfläche der Filterscheibe (1) aufsetzende Zähne ausgebildet ist.

7. Vorrichtung nach einem der vorhergehenden Ansprüche, **dadurch gekennzeichnet, dass** jede Filterscheibe (1) aus zwei aufeinanderliegenden Membranplatten ausgebildet ist.

8. Vorrichtung nach einem der vorhergehenden Ansprüche, **dadurch gekennzeichnet, dass** die Filterscheiben (1) auf zumindest einen Zentraldorn (3) aufgeschoben sind, dessen freie Enden Mittel zum Aufeinanderpressen der Filterscheiben (1) aufweisen.

9. Vorrichtung nach Anspruch 8 **dadurch gekennzeichnet, dass** der Zentraldorn (3) einen nicht rotationssymmetrischen Querschnitt hat.

10. Vorrichtung nach Anspruch 9, **dadurch gekennzeichnet, dass** jede Filterscheibe (1) einen Durchbruch mit einem Querschnitt hat, der gleich dem Querschnitt des Zentraldorns (3) ist.

11. Vorrichtung nach einem der Ansprüche 8 bis 10, **dadurch gekennzeichnet, dass** neben dem Zentraldorn (3) weitere Mittel zum Aufeinanderpressen der Filterscheiben (1) vorgesehen sind.

12. Vorrichtung nach einem der Ansprüche 8 bis 11, **dadurch gekennzeichnet,**
**dass** an den freien Enden des Zentraldorns (3) Flanschplatten (4) angeordnet sind, welche auf ihrer den Filterscheiben (1) zugeordneten Seite jeweils eine Kontur gleich der Kontur der Filterscheibe (1) aufweisen.

13. Vorrichtung nach einem der Ansprüche 8 bis 12, **dadurch gekennzeichnet, dass** im Zentrum jeder Filterscheibe (1) ein Einlegeblockteil (12) angeordnet ist, das einen Durchbruch (2) zum Hindurchführen des Zentraldorns (3) aufweist.

14. Vorrichtung nach Anspruch 13, **dadurch gekennzeichnet, dass** dem Durchbruch (2) weitere Durchbrüche (13) für eine filtrierte Flüssigkeit zugeordnet sind.

15. Vorrichtung nach einem der Ansprüche 1 bis 12, **dadurch gekennzeichnet, dass** jede Filterscheibe (1) Durchbrüche (13) für eine filtrierte Flüssigkeit aufweist.

16. Vorrichtung nach Anspruch 13 oder 14, **dadurch gekennzeichnet, dass** die Bauteile der Filterscheibe (1) miteinander verschweißt sind.

17. Vorrichtung nach einem der vorhergehenden Ansprüche, **dadurch gekennzeichnet, dass** die Filterscheiben (1) aus Edelstahl insbesondere durch ein Hydroformen gefertigt sind.

18. Vorrichtung nach einem der vorhergehenden Ansprüche, **dadurch gekennzeichnet, dass** in die Oberfläche jeder Filterscheibe (1) wenigstens eine Nut für eine Flachdichtung (10) eingebracht ist.

19. Vorrichtung nach Anspruch 18, **dadurch gekennzeichnet, dass** jede Flachdichtung (10) mittels eines Klebers auf der Filterscheibe (1) befestigt ist.

20. Vorrichtung nach einem der vorhergehenden Ansprüche, **dadurch gekennzeichnet, dass** auf der Oberfläche jeder Filterscheibe (1) Vorsprünge (9) angeordnet sind.

21. Verfahren zum Filtern von Flüssigkeiten, insbesondere von Abwässern, unter Verwenden einer Vorrichtung nach einem der Ansprüche 1 bis 20, **dadurch gekennzei chnet,** dass als Einrichtung zum Erzeugen einer Bewegung der Filterscheiben ein Oszillatorantrieb mit einer Frequenz ≧ 50 Hz eingesetzt wird.

22. Verfahren nach Anspruch 21, **dadurch gekennzeichnet, dass** die Oszillationsbewegung der Filterscheiben ausgehend von einer Mittellage in jede Richtung etwa 10 mm beträgt.

23. Verfahren nach Anspruch 21 oder 22, **dadurch gekennzeichnet, dass** die zu filternde Flüssigkeit in die eingesetzte Vorrichtung mit einem Druck bis zu 90 bar aufgegeben wird.

## Claims

1. A device for filtering liquids, particularly waste water, having filter discs lying on top of one another, which form a flow path for a liquid which is to be filtered, the device having at least one apparatus for creating a movement of the filter discs,
the apparatus for creating the movement being an oscillating drive for creating an oscillating movement of the filter discs,
and the filter discs (1) having means for positively connecting mutually adjacent filter discs (1), these means being assigned to at least one outer circumferential section of the filter disc (1) and these means being constructed by means of projections and depressions arranged on the surface of each filter disc (1).

2. The device according to claim 1, **characterized in that** the means for positive connection are assigned to two mutually opposite circumferential sections of the filter disc (1).

3. The device according to claim 1 or 2, **characterized in that** each filter disc (1) is constructed in an approximately circular manner and **in that** the means for positive connection are assigned to circumferential sections larger than 180° on the circumference of the filter disc (1).

4. The device according to claim 1 or 2, **characterized in that** each filter disc (1) is constructed in an approximately circular manner and **in that** the means for positive connection are assigned to circumferential sections larger than 10° on the circumference of the filter disc (1).

5. The device according to claim 4, **characterized in that** the projections and depressions are constructed by means of a corrugated contour (7) introduced into the outer edge of each filter disc (1).

6. The device according to claim 5, **characterized in that** the corrugated contour (7) is constructed by means of teeth mounted on the surface of the filter disc (1).

7. The device according to one of the preceding claims, **characterized in that** each filter disc (1) is constructed from two membrane plates lying one top of one another.

8. The device according to one of the preceding claims, **characterized in that** the filter discs (1) are pushed onto at least one central mandrel (3), the free ends of which have means for pressing together the filter discs (1).

9. The device according to claim 8, **characterized in that** the central mandrel (3) has a cross section which is not rotationally symmetrical.

10. The device according to claim 9, **characterized in that** each filter disc (1) has a hole with a cross section which is equal to the cross section of the central mandrel (3).

11. The device according to one of claims 8 to 10, **characterized in that** in addition to the central mandrel (3), further means for pressing together the filter discs (1) are provided.

12. The device according to one of claims 8 to 11, **characterized in that** flange plates (4) are arranged on the free ends of the central mandrel (3), which in each case have a contour equal to the contour of the filter disc (1) on the side thereof assigned to the filter discs (1).

13. The device according to one of claims 8 to 12, **characterized in that** an insertion block component (12) is arranged in the centre of each filter disc (1), which has a hole (2) for guiding through the central mandrel (3).

14. The device according to claim 13, **characterized in that** further holes (13) for a filtered liquid are assigned to the hole (2).

15. The device according to one of claims 1 to 12, **characterized in that** each filter disc (1) has holes (13) for a filtered liquid.

16. The device according to claim 13 or 14, **characterized in that** the components of the filter disc (1) are welded to one another.

17. The device according to one of the preceding claims, **characterized in that** the filter discs (1) are produced from high-grade steel, particularly by means of hydroforming.

18. The device according to one of the preceding claims, **characterized in that** at least one groove for a flat seal (10) is introduced into the surface of each filter disc (1).

19. The device according to claim 18, **characterized in that** each flat seal (10) is fastened on the filter disc (1) by means of an adhesive.

20. The device according to one of the preceding claims, **characterized in that** projections (9) are arranged on the surface of each filter disc (1).

21. A method for filtering liquids, particularly waste water, using a device according to one of claims 1 to 20,
**characterized in**
**that** an oscillating drive with a frequency ≥ 50 Hz is used as apparatus for creating a movement of the filter discs.

22. The method according to claim 21, **characterized in that** the oscillating movement of the filter discs is approximately 10 mm in each direction starting from a central position.

23. The method according to claim 21 or 22, **characterized in that** the liquid to be filtered is delivered into the device used with a pressure of up to 90 bar.

## Revendications

1. Dispositif destiné à filtrer des liquides, notamment des eaux usées avec des disques filtrants superposés, qui forment un trajet d'écoulement pour un liquide qui doit être filtré, sachant qu'il comporte au moins un système pour créer un mouvement des disques filtrants,
le système destiné à créer le mouvement étant un entraînement en oscillation pour créer un mouvement oscillatoire des disques filtrants et
les disques filtrants (1) comportant des moyens pour l'assemblage par complémentarité de forme de disques filtrants (1) voisins les uns des autres, lesdits moyens étant associés à au moins un segment de la circonférence extérieure du disque filtrant (1) et lesdits moyens étant conçus par des saillies et des creux placés sur la surface de chaque disque filtrant (1).

2. Dispositif selon la revendication 1, **caractérisé en ce que** les moyens pour l'assemblage par complémentarité de forme sont associés à deux segments circonférentiels mutuellement opposés du disque filtrant (1).

3. Dispositif selon la revendication 1 ou 2, **caractérisé en ce que** chaque disque filtrant (1) est conçu sous forme approximativement circulaire et **en ce que** les moyens pour l'assemblage par complémentarité de forme sont associés à des segments circonférentiels supérieurs à 180 ° sur la circonférence du disque filtrant (1).

4. Dispositif selon la revendication 1 ou 2, **caractérisé en ce que** chaque disque filtrant (1) est conçu sous forme approximativement circulaire et **en ce que** les moyens pour l'assemblage par complémentarité de forme sont associés à des segments circonférentiels supérieurs à 10° sur la circonférence du disque filtrant (1).

5. Dispositif selon la revendication 4, **caractérisé en ce que** les saillies et les creux sont conçus par un contour ondulé (7) ménagé dans le bord extérieur de chaque disque filtrant (1).

6. Dispositif selon la revendication 5, **caractérisé en ce que** le contour ondulé (7) est conçu par des dents posées sur la surface du disque filtrant (1).

7. Dispositif selon l'une quelconque des revendications précédentes, **caractérisé en ce que** chaque disque filtrant (1) est conçu sur deux plaques à membrane superposées.

8. Dispositif selon l'une quelconque des revendications précédentes, **caractérisé en ce que** les disques filtrants (1) sont emboîtés sur au moins un mandrin central (3) dont les extrémités libres comportent des moyens pour presser les uns sur les autres les disques filtrants (1).

9. Dispositif selon la revendication 8, **caractérisé en ce que** le mandrin central (3) a une section transversale non symétrique en rotation.

10. Dispositif selon la revendication 9, **caractérisé en ce que** chaque disque filtrant (1) a un percement avec une section transversale qui est identique à la section transversale du mandrin central (3).

11. Dispositif selon l'une quelconque des revendications 8 à 10, **caractérisé en ce qu'**à côté du mandrin central (3) sont prévus des moyens supplémentaires pour presser l'un sur l'autre les disques filtrants (1).

12. Dispositif selon l'une quelconque des revendications 8 à 11, **caractérisé en ce que** sur les extrémités libres du mandrin central (3) sont placées des plaques de bridage (4), qui sur leur côté associé aux disques filtrants (1) comportent chacune un contour identique au contour du disque filtrant (1).

13. Dispositif selon l'une quelconque des revendications 8 à 12, **caractérisé en ce qu'**au centre de chaque disque filtrant (1) est placé un bloc d'insertion (12) qui comporte un percement (2) pour faire passer le mandrin central (3).

14. Dispositif selon la revendication 13, **caractérisé en ce qu'**au percement (2) sont associés des percements (13) supplémentaires pour un liquide filtré.

15. Dispositif selon l'une quelconque des revendications 1 à 12, **caractérisé en ce que** chaque disque filtrant (1) comporte des percements (13) pour un liquide filtré.

16. Dispositif selon la revendication 13 ou 14, **caractérisé en ce que** les éléments constitutifs du disque filtrant (1) sont soudés les uns aux autres.

17. Dispositif selon l'une quelconque des revendications précédentes, **caractérisé en ce que** les disques filtrants (1) sont fabriqués en acier inoxydable, notamment par hydroformage.

18. Dispositif selon l'une quelconque des revendications précédentes, **caractérisé en ce que** dans la surface de chaque disque filtrant (1) est ménagée au moins une rainure pour un joint plat (10).

19. Dispositif selon la revendication 18, **caractérisé en ce que** chaque joint plat (10) est fixé au moyen d'un agent adhésif sur le disque filtrant (1).

20. Dispositif selon l'une quelconque des revendications précédentes, **caractérisé en ce que** sur la surface de chaque disque filtrant (1) sont placées des saillies (9).

21. Procédé destiné à filtrer des liquides, notamment des eaux usées en utilisant un dispositif selon l'une quelconque des revendications 1 à 20,
**caractérisé en ce**
**qu'**en tant que système pour créer un mouvement des disques filtrants, on utilise un entraînement oscillatoire avec une fréquence ≥ 50 Hz.

22. Procédé selon la revendication 21, **caractérisé en ce qu'**à partir d'une position centrale, le mouvement oscillatoire des disques filtrants est d'environ 10 mm, dans chaque direction.

23. Procédé selon la revendication 21 ou 22, **caractérisé en ce que** le liquide qui doit être filtré est introduit dans le dispositif utilisé à une pression de jusqu'à 90 bar.
